# EUROPEAN PATENT APPLICATION

(11) **EP 4 791 104 A1**
(43) Date of publication of application: **12.08.2026**
(21) Application number: 24884298.1
(22) Date of filing: 23.09.2024
(51) Int. Cl.: H04W 72/40, H04W 16/14, H04W 74/08, H04W 76/14

(54) **UNLICENSED FREQUENCY BAND RESOURCE SELECTION METHOD AND APPARATUS, AND TERMINAL**

(30) Priority: 02.11.2023 CN 202311451842
(71) Applicant: CICT Connected and Intelligent Technologies Co., Ltd., Chongqing 400041 (CN)
(72) Inventor: WEN, Xiaoran, Chongqing 400041 (CN); ZHAO, Rui, Chongqing 400041 (CN); WANG, Yakun, Chongqing 400041 (CN)
(74) Representative: Zacco GmbH
(86) International application number: PCT/CN2024/120302
(87) International publication number: WO 2025/092291

(57) **Abstract**

Provided are a resource selection method and device for an unlicensed band, and a terminal. The method is applied to a terminal, and comprises: performing a target operation in a case that a sidelink consistent listen-before-talk (LBT) failure is triggered, the target operation including at least one of the following: resource re-selection; candidate resource set determination; resource re-evaluation; and resource pre-emption check. For terminals operating in an unlicensed band, the solution of the present disclosure defines how to perform resource re-evaluation, resource pre-emption check, resource re-selection, and candidate resource set determination, so that the terminal may perform timely and reliable transmission on the unlicensed band.

## Description

### Technical Field

The present disclosure relates to the technical field of communications, and in particular, to a resource selection method and device for an unlicensed band, and a terminal.

### Background

The existing sidelink (SL) mode-2 resource allocation method is based on the scenario where the terminal operates on a dedicated carrier, and supports mechanisms such as sidelink discontinuous reception, re-evaluation, pre-emption check, and resource re-selection, so as to reduce power consumption of a UE and improve reliability of service transmission.

For sidelink terminals (i.e., UEs) operating on the unlicensed band, channel access may be completed before transmission; in a case that channel access fails, the corresponding transmission cannot be performed; to meet the potential power-saving requirements of sidelink terminals operating in the unlicensed band and to ensure the reliability of service transmission, it is still necessary to support mechanisms such as sidelink discontinuous reception, re-evaluation, pre-emption check, and resource re-selection, so that the terminal may perform timely and reliable transmission on the unlicensed band.

However, for sidelink terminals operating in the unlicensed band, how to perform resource selection mechanisms such as resource re-evaluation, pre-emption check, and resource re-selection has not yet been defined.

### Summary

Provided are a resource selection method and device for an unlicensed band, and a terminal. The present disclosure solves the problem of how to perform re-evaluation, resource pre-emption check, resource re-selection and candidate resource set determination for terminals working on an unlicensed band.

According to a first aspect, some embodiments of the present disclosure provide a resource selection method for an unlicensed band, applied to a terminal, including:
performing a target operation in a case that a sidelink consistent listen-before-talk (LBT) failure is triggered, the target operation including at least one of the following:
resource re-selection;
candidate resource set determination;
resource re-evaluation; and
resource pre-emption check.

Alternatively, performing the target operation in a case that the sidelink consistent listen-before-talk (LBT) failure is triggered includes:
performing the target operation in a case that the sidelink consistent LBT failure is triggered on a first resource block (RB) set, wherein the first RB set is a resource block set occupied by a selected resource of the terminal; and the selected resource of the terminal includes at least one single-slot resource or at least one consecutive multi-slot resource.

Alternatively, performing resource re-selection includes:
clearing a selected sidelink grant associated with a sidelink process, and triggering resource re-selection.

Alternatively, performing resource re-selection includes at least one of:
clearing a selected sidelink grant associated with a sidelink process, and triggering resource re-selection;
performing resource re-selection on resources overlapping with the first RB set, and updating the sidelink grant; and
performing resource re-selection on resources overlapping with the first RB set, and not updating the sidelink grant.

Alternatively, performing resource re-selection on resources overlapping with the first RB set, and not updating the sidelink grant include:
in cases where an LBT recovery duration is less than a service transmission period, performing resource selection for resources overlapping with the first RB set, and not updating the sidelink grant.

Alternatively, performing candidate resource set determination includes at least one of the following:
in a case that a candidate resource set obtained by excluding resources does not include candidate single-slot resources within an active time of a sidelink (SL) discontinuous reception (DRX) of a receiving terminal, additionally selecting, for the candidate resource set, at least one candidate single-slot resource within the active time;
in a case that the candidate resource set obtained by excluding resources does not include candidate multi-slot resources within the active time of the SL DRX of the receiving terminal, additionally selecting, for the candidate resource set, at least one candidate multi-slot resource within the active time; and
in a case that the candidate resource set obtained by excluding resources does not include at least partially overlapping candidate multi-slot resources within the active time of the SL DRX of the receiving terminal, additionally selecting, for the candidate resource set, at least one at least partially overlapping candidate multi-slot resource within the active time.

Alternatively, performing resource re-evaluation includes:
acquiring a resource set to be re-evaluated provided by a higher layer, wherein each value in the resource set corresponds to a single-slot resource or a consecutive multi-slot resource;
performing re-evaluation on resources in the resource set, and determining a first target resource not included in a candidate resource set;
performing resource re-selection for the first target resource,
wherein in cases where the first target resource is a single-slot resource and is included in the initially selected continuous multi-time slot resource, or, in cases where the first target resource is a consecutive multi-slot resource and has a length smaller than that of the initially selected consecutive multi-slot resource, performing resource re-selection for the first target resource includes: performing resource re-selection only for the first target resource, or performing resource re-selection for the consecutive multi-slot resource including the first target resource.

Alternatively, performing resource pre-emption check includes:
acquiring a resource set which is provided by a higher layer and on which resource pre-emption check is to be performed, wherein each value in the resource set corresponds to a single-slot resource or a consecutive multi-slot resource;
according to a candidate resource set and a transmission priority, performing pre-emption checking on resources in the resource set, and determining a second target resource to be pre-empted;
performing resource re-selection for the second target resource,
wherein in cases where the second target resource is a single-slot resource and is included in the initially selected continuous multi-time slot resource, or, in cases where the second target resource is a consecutive multi-slot resource and has a length smaller than that of the initially selected consecutive multi-slot resource, performing resource re-selection for the second target resource includes:
   performing resource re-selection only for the second target resource, or,
   performing resource re-selection for the consecutive multi-slot resource including the second target resource; or,
   when all consecutive multi-slot resources including the second target resource are pre-empted, performing resource re-selection on the consecutive multi-slot resources.

Alternatively, the method further includes:
in a case that the number of consecutive slots for multi-consecutive slots transmission, provided by the higher layer, is N, and N is an integer greater than 1, then each value in the resource set corresponds to a consecutive multi-slot resource having a length of N.

Alternatively, the number N of consecutive slots for multi-consecutive slots transmission, provided by the higher layer, is equal to the number of multi-consecutive slots transmission slots selected when the terminal performs initial resource selection.

Alternatively, for multi-consecutive slots transmission, the resources to be re-evaluated or the resources to be pre-empted and checked, which are determined by the higher layer, include:
a first resource of the consecutive multi-slot resources; or,
an entire set of resources of the consecutive multi-slot resources; or,
first M resources of the consecutive multi-slot resources, M being the maximum number of resources indicated by sidelink control information (SCI), or M being a positive integer determined by the higher layer.

According to a second aspect, some embodiments of the present disclosure provide a terminal, including: a transceiver, a memory, a processor, and a computer program stored in the memory and capable of operating on the processor. When performing the computer program, the processor implements the steps of the resource selection method for the unlicensed band according to the first aspect.

According to a third aspect, some embodiments of the present disclosure provide a resource selection device for an unlicensed band, including:
a processing module, configured to execute a target operation in a case that a sidelink consistent listen-before-talk (LBT) failure is triggered, the target operation including at least one of the following:
resource re-selection;
candidate resource set determination;
resource re-evaluation; and
resource pre-emption check.

According to a fourth aspect, some embodiments of the present disclosure provide a non-transitory computer readable storage medium storing a computer program, which when being executed by the processor, implements the steps of the resource selection method for the unlicensed band according to the first aspect.

The beneficial effects of the technical solutions of the present disclosure are as follows:
in the described solution, performing a target operation in a case that a sidelink consistent listen-before-talk (LBT) failure is triggered, the target operation including at least one of the following: resource re-selection; candidate resource set determination; resource re-evaluation; and resource pre-emption check. In this way, with regard to terminals working on an unlicensed band, the present solution defines how to perform resource re-evaluation, resource pre-emption check, resource re-selection, and candidate resource set determination, so that the terminal may perform timely and reliable transmission on the unlicensed band.

### Brief Description of the Drawings

Fig. 1 is a schematic diagram of the DRX principle;
Fig. 2 is a schematic diagram of a sensing window and a selection window for resource allocation;
Fig. 3 is a flowchart of a resource selection method for an unlicensed band according to an embodiment of the disclosure;
Fig. 4 is a first schematic diagram of resource re-selection according to some embodiments of the present disclosure;
Fig. 5 is a second schematic diagram of resource re-selection according to some embodiments of the present disclosure;
Fig. 6 is a third schematic diagram of resource re-selection according to some embodiments of the present disclosure;
Fig. 7 is a schematic diagram of a relationship between a candidate resource set and DRX according to some embodiments of the present disclosure;
Fig. 8 is a schematic diagram of resource re-evaluation according to some embodiments of the present disclosure;
Fig. 9 is a schematic diagram of resource pre-emption check according to some embodiments of the present disclosure;
Fig. 10 is a structural block diagram of a resource selection device for an unlicensed band according to some embodiments of the present disclosure;
Fig. 11 is a structural block diagram of a terminal according to the present disclosure.

### Detailed Description of the Embodiments

To make the technical problems to be resolved, technical solutions, and advantages of the present disclosure clearer, the following describes the present application in detail with reference to the accompanying drawings and specific embodiments. In the following descriptions, specific details such as specific configurations and components are provided only to help fully understand embodiments of the present disclosure. Therefore, a person skilled in the art should understand that various changes and modifications may be made to the embodiments described herein without departing from the scope and spirit of the present disclosure. In addition, for clarity and simplicity, descriptions of known functions and constructions are omitted.

It should be understood that, "one embodiment" and "an embodiment" throughout this description means that specific features, structures or characteristics related to the embodiments may be included in at least one embodiment of the present disclosure. Therefore, descriptions of "in one embodiment" or "in an embodiment" in various places throughout this description are unnecessary to refer to a same embodiment. In addition, the specific features, structures, or characteristics may be combined in one or more embodiments in any appropriate manner.

In embodiments of the present disclosure, it should be understood that, sequence numbers of the foregoing processes do not mean execution sequences. The execution sequences of the processes should be determined based on functions and internal logic of the processes, and should not be construed as any limitation on the implementation processes of embodiments of the present disclosure.

Additionally, the terms "system" and "network" may be used interchangeably herein.

In the embodiments of the present application, it should be understood that, "B that corresponds to A" means that B is associated with A, and B may be determined based on A. However, it should be further understood that determining B based on A does not mean that B is determined based on only A. B may alternatively be determined based on A and/or other information.

First, the content involved in the solutions provided in the embodiments of the present application are introduced below.

### I. Channel access procedure of SL-U

The channel access procedure on the shared spectrum is a sensing-based procedure that evaluates the availability of channels for performing transmission. The basic unit for sensing is a sensing slot having a length of Tₛₗ=9us. In a case that a UE performs sensing during a sensing slot and determines that at least 4us of the monitoring energy within the sensing slot is below an energy detection threshold X_{Thresh}, the sensing slot is considered to be idle; otherwise, the sensing slot duration Tₛₗ is considered to be busy.

### II. Discontinuous reception (DRX)

In a mobile communication system based on shared channels, such as Long Term Evolution (LTE), the transmission of uplink and downlink data is controlled by a base station (eNB) scheduler. When determining to schedule a certain user, the scheduler notifies, by means of a control channel, the terminal regarding on which resources data is to be sent or received. The terminal (UE) monitors the control channel, and when detecting that scheduling information thereof is contained, completes sending (uplink) or receiving (downlink) of data according to an indication on the control channel.

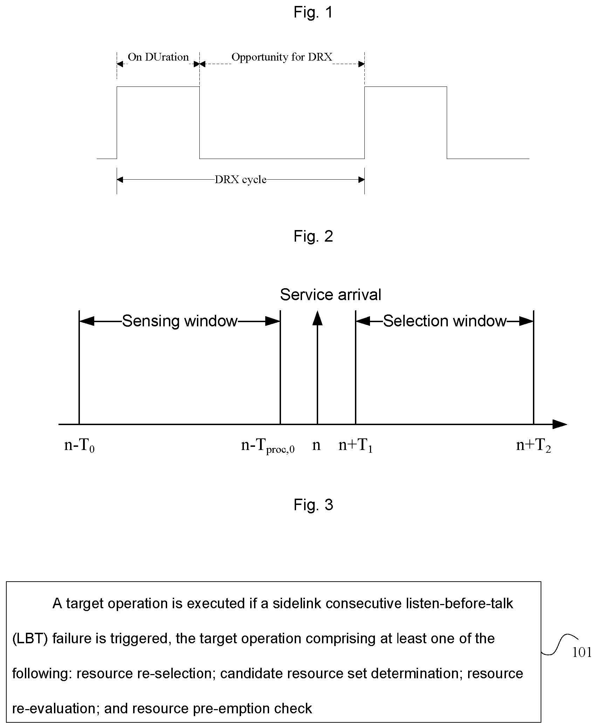

In an activated state, since the terminal does not determine when an eNB will schedule, a common working mode is that the terminal continuously monitors a control channel, and parses each subframe containing a downlink scheduling control channel thereof, so as to determine whether it is scheduled. This working mode may achieve high efficiency when the terminal has a large amount of data and may be frequently scheduled. However, for some services, the arrival frequency of data is relatively low, resulting in a relatively small number of times the terminal is scheduled; and in a case that the terminal still continuously monitors the control channel, the power consumption of the terminal will be undoubtedly increased. In order to solve the problem of power consumption, the LTE system uses a DRX working mode as shown in Fig. 1, and in this working mode, the terminal periodically monitors the control channel, thus achieving the purpose of saving power.

In the NR-V2X, considering that a PUE also has a service receiving requirement, in order to solve the problem of power consumption caused by continuous receiving of a P-UE, a sidelink introduces a DRX characteristic.

The basic principle of the sidelink DRX is shown in Fig. 1. On Duration corresponds to a period of time in which the UE monitors both the PSCCH and the 2nd SCI, with a radio frequency channel being turned on and continuously monitoring the PSCCH and 2nd SCI. During the time period other than the On Duration, the UE may skip monitoring the PSCCH and 2nd SCI to save power. The On Duration occurs periodically, with the specific period being configured by the base station, pre-configured, or implemented by self-configuration of the transmitting UE.

### III. NR-V2X Mode 2 resource allocation

NR-V2X Mode 2 resource allocation is designed to support enhanced application requirements which cannot be supported by LTE-V2X, and adopts a distributed resource scheduling approach (i.e., the UE autonomously selects transmission resources). Without centralized scheduling by a base station, the UE needs to determine the resource occupancy status of other UEs by means of a sensing mechanism and select resources on the basis of the sensing result. The resource selection process of the NR-V2X Model 2 is as follows:
a) the candidate single-slot resource R_{x,y} consists of (x+j) consecutive subchannels on a slot ty within the time [n+T₁, n+T₂], as shown in Fig. 2, wherein 0 ≤ T₁ ≤ T_{proc,1}; T_{proc,1} corresponds to a sending processing delay of a UE (including sensing-based resource selection time, sending preparation time of a PSCCH, and sending preparation time of a PSSCH); the value thereof may be {3, 5, 9, 17} physical slots, respectively corresponding to SCS {15, 30, 60, 120} kHz; T₂ₘᵢₙ ≤ T₂ ≤ maintaining PDB, wherein T₂ₘᵢₙ is the minimum value of T₂ configured by a higher layer parameter t₂ₘᵢₙ_SelectionWindow, and maintaining PDB is a residual delay budget of a data packet. The total number of candidate single-slot resources is Mtotal.
b) The UE continuously monitors slots within a sensing window [n-T₀, n-T_{proc,0}], and performs PSCCH and PSSCH decoding and PSSCH or PSCCH-RSRP measurement, wherein T₀ is a sensing window length configured by a higher layer; T_{proc,0} is time when the UE process a previous sensing result; and the values may be {1, 1, 2, 4} physical slots, which respectively correspond to SCS {15, 30, 60, 120} kHz.
c) Th(pi, pj) indicates the ith RSRP field in sl-ThresPSSCH-RSRP-List-r16, wherein i=pi+(pj-1)x8; pi corresponds to the priority indicated in the received SCI; pj corresponds to the priority of the transmission of the transmitting UE; and pj = prioTX.
d) Initialize SA as a set of all candidate single-slot resources.
e) Exclude candidate slots corresponding skip slots, wherein skip slots are slots (e.g., y) that cannot perform sensing due to half-duplex impact; for all system-configured periods (such as 20 ms, 50 ms, 100 ms), exclude all subsequent candidate slots at corresponding positions (i.e. slots falling within a selection window of y, y+20x2µ, y+40x2µ, y+50x2µ, y+60x2µ, y+80x2µ, y+100x2µ, etc.).

Exclude candidate single-slot resources that meet the following two conditions:
condition 1: the PSSCH-RSRP measurement value indicated by the received SCI is higher than Th(*prioRX, prioTX*);
condition 2: the reserved resources indicated by the received SCI will partially or fully overlap with the TB transmitted on the candidate resource y, or with a TB sent on a subsequent candidate resource on y+x*Pstep*2µ, where Pstep is a service generation period, the unit is ms, x is an integer, and corresponds to the subsequent period number.
   g) In a case that the remaining resources in SA are less than X * Mtotal, then increase Th(pi, pj) uniformly by 3dB and return d. For a given prioTX, X is configured by the higher layer parameter sl-xPercentage(prioTX).
   h) The UE reports the SA to the higher layer.
   i) The higher layer randomly selects initial transmission and retransmission resources for the current TB in the SA, while satisfying the HARQ RTT constraint.

On this basis, in order to solve resource collisions caused by non-periodic burst traffic and to ensure the reliability of high-priority services, re-evaluation and pre-emption mechanisms have been added. The re-evaluation mechanism mainly aims at unreserved resources. Before resource transmission, according to the latest sensing result, it determines whether the selected resources have collided. In a case that a collision occurs, re-selection may be performed, thereby reducing the resource collision probability.

The Pre-emption mechanism mainly aims at reserved resources. In a case that it is detected that reserved resources are being pre-empted by a high-priority UE, the low-priority UE is triggered to reselect resources, thereby avoiding collisions between high-priority services and low-priority services and ensuring the performance of high-priority services.

The existing sidelink mode-2 resource allocation method is based on the scenario where the terminal operates on a dedicated carrier, and supports mechanisms such as sidelink discontinuous reception, reevaluation, preemption checking, and resource reselection, so as to reduce power consumption of a UE and improve reliability of service transmission. For sidelink terminals operating on the unlicensed band, channel access may be completed before transmission; in a case that channel access fails, the corresponding transmission cannot be performed; to meet the potential power-saving requirements of sidelink terminals operating in the unlicensed band and to ensure the reliability of service transmission, it is still necessary to support mechanisms such as sidelink discontinuous reception, reevaluation, preemption checking, and resource reselection, and perform corresponding enhancement, so that the terminal may perform timely and reliable transmission on the unlicensed band.

Based on the above, the embodiments of the present disclosure provide a resource selection method and device for an unlicensed band, and a terminal. The present disclosure solves the problem of how to perform reevaluation, resource preemption check, resource reselection and candidate resource set determination for terminals working on an unlicensed band.

### First embodiment

As shown in Fig. 3, some embodiments of the present disclosure provide a resource selection method for an unlicensed band, specifically including the following steps:
step 101: a target operation is executed in a case that a sidelink consistent listen-before-talk (LBT) failure is triggered, the target operation including at least one of the following:
resource re-selection;
candidate resource set determination;
resource re-evaluation; and
resource pre-emption check.

In the embodiment above, by performing at least one of candidate resource set redetermination, resource re-selection, resource re-evaluation, and pre-emption check after the SL consistent LBT failure is triggered, terminals operating on unlicensed bands perfect the sidelink resource selection process on unlicensed bands, and enhance the reliability of service transmission on unlicensed bands, making it more suitable for terminals operating on unlicensed bands to perform resource selection.

It should be noted that the execution of the described operations is not limited to cases where the sidelink consistent LBT failure is triggered. The execution of a target operation may not limit a constraint condition, and may also be applied to other situations, for example, the target operation may also be executed at a resource selection moment, or at a moment T3 before resource selection; where T3 is the processing time interval associated with the subcarrier spacing.

In some embodiments, performing resource re-selection includes:
clearing a selected sidelink grant associated with a sidelink process, and triggering resource re-selection.

In some embodiments, in step 101, performing the target operation in a case that the sidelink consistent listen-before-talk (LBT) failure is triggered includes:
performing the target operation in a case that the sidelink consistent LBT failure is triggered on a first resource block (RB) set, wherein the first RB set is a resource block set occupied by a selected resource of the terminal; and the selected resource of the terminal includes at least one single-slot resource or at least one consecutive multi-slot resource.

In some embodiments, performing resource re-selection includes at least one of:
clearing a selected sidelink grant associated with a sidelink process, and triggering resource re-selection;
performing resource re-selection on resources overlapping with the first RB set, and updating the sidelink grant; and
performing resource re-selection on resources overlapping with the first RB set, and not updating the sidelink grant.

It should be noted that this embodiment may be applied to an application scenario in which a sidelink consistent LBT failure is triggered on a first resource block (RB) set.

Exemplarily, in a case that the SL consistent LBT failure is triggered on the first RB set, it is considered that the first RB set is no longer available, and in this case, in a case that the resources selected by the terminal are located in the first RB set or overlap with the first RB set, resource re-selection needs to be performed. Specifically, one of three modes may be included:
mode 1: clearing a selected sidelink grant associated with a sidelink process, and triggering resource re-selection.

In mode 1, no matter whether the resources selected by the UE overlap with the first RB set, since the sidelink grant has been cleared, the terminal needs to perform resource reselection for the entire Transport Block (TB), that is, the UE re-executes the resource selection process and excludes, upon determination of the candidate resource set, the first RB set on which the SL consistent LBT failure is triggered.

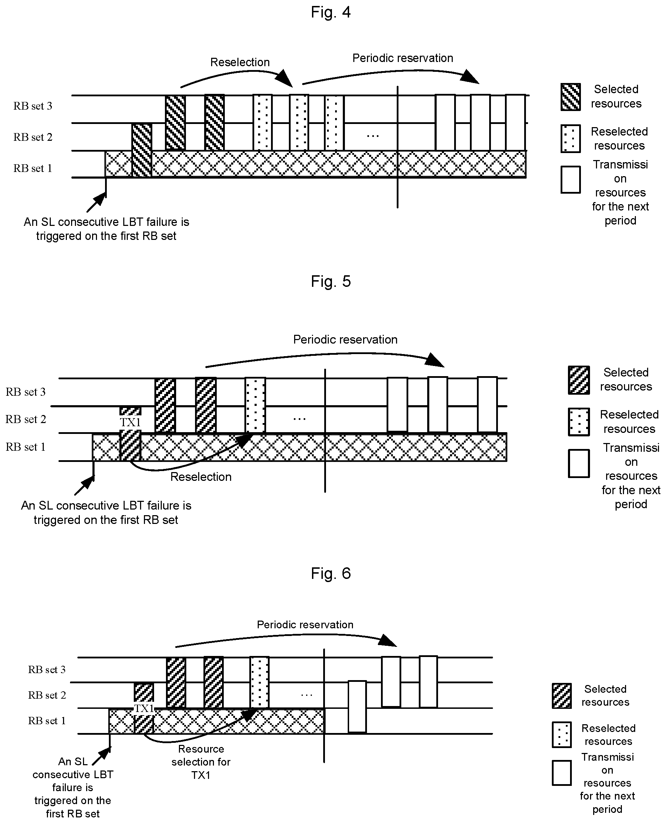

Exemplarily, referring to Fig. 4, before the terminal transmission, in a case that a consistent LBT failure is triggered on the RB set 1, the terminal triggers resource reselection for the entire TB and excludes RB set 1 when determining the candidate resource set, that is, during resource reselection, transmission resources are selected only on the other two available RB sets 2 and 3. In this case, the terminal uses the reselected resources for all transmissions in the next period.

Mode 2: resource re-selection is performed on resources overlapping with the first RB set, and the sidelink grant is updated.

In mode 2, the terminal performs resource re-selection only on resources overlapping with the first RB set, may select to re-determine the candidate resource set, excludes the first RB set on which the SL consistent LBT failure is triggered, or directly select, from the current candidate resource set, resources that do not overlap with the first RB set. For the subsequent transmission of the periodic service, considering that the first RB set may be unavailable for a future period of time, the terminal removes, from the selected sidelink grant associated with the sidelink process, the resources overlapping with the first RB set, and replaces the removed resources with the resources reselected for the selected sidelink grant.

Exemplarily, referring to Fig. 5, before the terminal transmission, in a case that a consistent LBT failure is triggered on RB set 1, and the terminal determines that the current TX1 resources overlap with RB set 1, then the terminal performs resource re-selection only for the TX1 resources, and accordingly updates the sidelink grant, so that subsequent transmissions also use the newly selected resources.

Mode 3: resource re-selection is performed on resources overlapping with the first RB set, and the sidelink grant is not updated.

In mode 3, the terminal directly selects, from the current candidate resource set, a resource that does not overlap with the first RB set, and does not update the sidelink grant, that is to say, considering that, for example, the time for the restoration of the SL consistent LBT is less than the transmission period of the current periodic transmission, the terminal still uses the initially selected resource for the transmission of the subsequent period. For resources overlapping with the first RB set, the terminal may abandon transmission on the resource, and randomly select new resources for the resource.

Alternatively, performing resource re-selection on resources overlapping with the first RB set, and not updating the sidelink grant include: in cases where an LBT recovery duration is less than a service transmission period, performing resource selection for resources overlapping with the first RB set, and not updating the sidelink grant.

For example, referring to Fig. 6, before the terminal transmission, in a case that a consistent LBT failure is triggered on RB set 1, and the time for restoration of the SL consistent LBT is less than the transmission period of the current periodic transmission, the terminal determines that the current TX1 resources overlap with the RB set 1, and then the UE randomly selects resources for TX1, and does not update the sidelink grant, so that subsequent transmissions still use the initially selected resources.

In the foregoing embodiment, when a sidelink consistent LBT failure is triggered on a first resource block (RB) set, resource re-selection is executed, thereby ensuring that the terminal may perform timely and reliable transmission on the unlicensed band.

In some embodiments, performing candidate resource set determination includes at least one of the following:
in a case that a candidate resource set obtained by excluding resources does not include candidate single-slot resources within an active time of a discontinuous reception (DRX) of a receiving terminal, additionally selecting, for the candidate resource set, at least one candidate single-slot resource within the active time;
in a case that the candidate resource set obtained by excluding resources does not include candidate multi-slot resources within the active time of the SL DRX of the receiving terminal, additionally selecting, for the candidate resource set, at least one candidate multi-slot resource within the active time; and
in a case that the candidate resource set obtained by excluding resources does not include at least partially overlapping candidate multi-slot resources within the active time of the SL DRX of the receiving terminal, additionally selecting, for the candidate resource set, at least one at least partially overlapping candidate multi-slot resource within the active time.

It should be noted that, the triggering conditions for performing the candidate resource set determination are not limited to the case where a consistent LBT failure is triggered. For example, the execution of the candidate resource set determination may not limit a trigger condition, and may also be applied to other trigger conditions, for example, when a resource selection is triggered.

In specific implementations, in a case that the higher layer provides the UL DRX activation time of the receiving terminal, and the candidate resource set SA includes no candidate single-slot resource within the UL DRX activation time of the receiving terminal, or in a case that there is no candidate multi-slot resource at least partially overlapping with the UL DRX activation time of the receiving terminal, then the transmitting terminal additionally selects at least one candidate single-slot resource within the UL DRX activation time of the receiving terminal, or at least one candidate multi-slot resource that at least partially overlaps with the UL DRX activation time of the receiving terminal.

In specific implementations, in a case that the higher layer provides the UL DRX activation time of the receiving terminal, and the candidate resource set SA does not include candidate single-slot resources within the UL DRX activation time of the receiving terminal, or in a case that there is no candidate multi-slot resource within the UL DRX activation time of the receiving terminal, then the transmitting terminal additionally selects at least one candidate single-slot resource within the UL DRX activation time of the receiving terminal, or at least one candidate multi-slot resource within an SL DRX activation time of the receiving terminal.

Alternatively, the method of additionally selecting at least one candidate single-slot resource from the initial candidate resource set may include:
randomly selecting, from the initial candidate resource set, at least one candidate single-slot resource within the SL DRX activation time of the receiving terminal; or,
selecting, from the initial candidate resource set and on the basis of an RSRP measurement result, at least one candidate single-slot resource having a low RSRP measurement value and located within the SL DRX activation time of the receiving terminal.

Alternatively, the method of additionally selecting at least one candidate multi-slot resource from the initial candidate resource set may include:
randomly selecting, from the initial candidate resource set, at least one candidate multi-slot resource which overlaps with or is located within the SL DRX activation time of the receiving terminal; or,
selecting, from the initial candidate resource set and on the basis of the RSRP measurement result, at least one candidate multi-slot resource having a lower RSRP measurement value and overlapping with the SL DRX activation time interval of the receiving terminal.

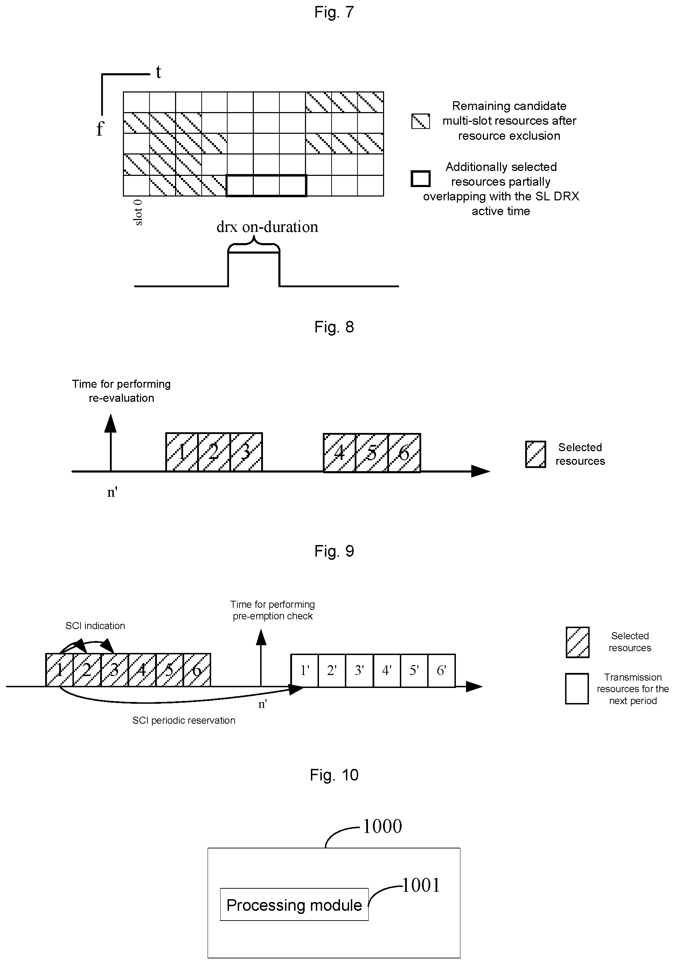

Exemplarily, referring to Fig. 7, the terminal determines the candidate multi-slot resource set according to the number N of slots, provided by the higher layer, for multi-consecutive slots transmission; and after the resources are excluded, the remaining candidate multi-slot resources do not overlap with sidelink DRX activation time. To improve transmission reliability and ensure that the receiving terminal may receive at least part of the transmission within the DRX active time, the terminal randomly selects at least one candidate multi-slot resource from at least the initial candidate resource set, such that the selected candidate multi-slot resource at least partially overlaps with the sidelink DRX active time of the receiving terminal.

In the foregoing embodiment, in a case that the higher layer provides the activation time of the sidelink DRX of the receiving terminal, then when determining the candidate resource set, the sending terminal also needs to consider the activation time of the sidelink DRX of the receiving terminal, so as to ensure that some candidate resources are located within the activation time of the sidelink DRX of the receiving terminal. In particular, in cases where the candidate resources are consecutive multi-slot resources, it needs to be ensured that at least one consecutive multi-slot resource partially overlaps with the DRX activation time of the receiving terminal, or that at least one consecutive multi-slot resource is located within the DRX activation time of the receiving terminal. Therefore, in this embodiment, after the resources are excluded, in a case that no candidate multi-slot resource meeting the described condition is found, at least one resource needs to be additionally selected from the initial candidate resource set.

In some embodiments, performing resource re-evaluation includes:
acquiring a resource set to be re-evaluated provided by a higher layer, wherein each value in the resource set corresponds to a single-slot resource or a consecutive multi-slot resource;
performing re-evaluation on resources in the resource set, and determining a first target resource not included in a candidate resource set;
performing resource re-selection for the first target resource,
wherein in cases where the first target resource is a single-slot resource and is included in the initially selected continuous multi-time slot resource, or, in cases where the first target resource is a consecutive multi-slot resource and has a length smaller than that of the initially selected consecutive multi-slot resource, performing resource re-selection for the first target resource includes: performing resource re-selection only for the first target resource, or performing resource re-selection for the consecutive multi-slot resource including the first target resource.

It should be noted that, the triggering conditions for performing resource re-selection are not limited to the case where a consistent LBT failure is triggered. For example, the execution of resource re-evaluation may not limit a trigger condition, and may also be applied to another trigger condition. For example, the resource re-evaluation is triggered at moment T3 before a first resource in a resource set to be re-evaluated, wherein T3 is a processing time related to a subcarrier interval.

Exemplarily, the steps of for sidelink terminals working on an unlicensed band to execute resource re-evaluation may include the following:
step 1, the higher layer provides to the physical layer a resource set (*r*₀, *r*₁, *r*₂, ...) to be re-evaluated,
wherein the resource set to be re-evaluated is also referred to as "a resource set that may need to be re-evaluated" or "a resource set that may be affected by the re-evaluation", and specifically includes resources that have been selected by the terminal and are not indicated by previous SCI.

Alternatively, for multi-consecutive slots transmission, the resources to be re-evaluated are only the first resource of the multi-consecutive slots transmission or the entire group of resources of the multi-consecutive slots transmission or the first M resources of consecutive multi-slot resources; wherein in a case that the terminal selects a single-slot resource during initial resource selection, when performing resource re-evaluation is performed, each value in a resource set indicated by the higher layer corresponds to a single-slot resource; in a case that the terminal selects consecutive multi-slot resources during initial resource selection, then when performing resource re-evaluation, the higher layer may indicate that each value in the resource set corresponds to a single-slot resource or a consecutive multi-slot resource.

Alternatively, in a case that the number of consecutive slots for multi-consecutive slots transmission, provided by the higher layer, is N and N is an integer greater than 1, then each value in the resource set to be re-evaluated corresponds to a consecutive multi-slot resource having a length of N.

It should be noted that, when the number of consecutive slots for multi-consecutive slots transmission, provided by the higher layer, is N and N is an integer greater than 1, then it is only an optional implementation that each value in the resource set to be re-evaluated corresponds to a consecutive multi-slot resource having a length of N. In practical applications, when the number of consecutive slots for multi-consecutive slots transmission, provided by the higher layer, is N and N is an integer greater than 1, it may also be used for determining the candidate resource set at a granularity of multi-slot having a length of N, but not for determining the granularity of the resources represented by each value in the resource set to be re-evaluated.

Alternatively, the number N of consecutive slots for multi-consecutive slots transmission, provided by the higher layer, is equal to the number of multi-consecutive slots transmission slots selected when the terminal performs initial resource selection.

Exemplarily, referring to Fig. 8, during initial resource selection, the terminal selects two groups of consecutive multi-slot resources having a length of 3; at the moment of n', the higher layer triggers the physical layer to perform resource re-evaluation, and provides resources required to be re-evaluated. In this case, the higher layer may instruct the physical layer to perform single-slot resource re-evaluation on the multi-slot resources (1, 2, 3) (i.e. in the resource set to be re-evaluated, r0 corresponds to 1, r₁ corresponds to 2, and r₂ corresponds to 3; the physical layer determines the candidate resource set at a granularity of single slot); or, the higher layer may instruct the physical layer to perform multi-slot resource re-evaluation on the multi-slot resource (1, 2, 3) (i.e. in a resource set to be re-evaluated, r₀ corresponds to 1, r₁ corresponds to 2, r₂ corresponds to 3, and the physical layer determines a candidate resource set at a granularity of multi-slot (i.e. 3 slots); or, the higher layer may instruct the physical layer to perform multi-slot resource re-evaluation on the resource (1); wherein (1) corresponds to a consecutive multi-slot resource of which the starting resource is 1 and the length is N (i.e. in the resource set to be re-evaluated, r₀ corresponds to 1, and the physical layer determines the candidate resource set at a granularity of multi-slot (i.e. 3 slots)). Certainly, the higher layer may also instruct the physical layer to perform single-slot resource re-evaluation on resources (1, 2, 3, 4), or instruct the physical layer to perform multi-slot resource re-evaluation on resources (1, 4), wherein (1, 4) corresponds to a consecutive multi-slot resource of which the starting resource is 1 and the length is N, and a consecutive multi-slot resource of which the starting resource is 4 and the length is N.

Step 2: the physical layer re-determines a candidate resource set (SA) according to the moment n' when the higher layer triggers re-evaluation, and/or the number N of consecutive slots for multi-consecutive slots transmission, and reports the SA to the higher layer.
In a case that each value in the set (r₀, r₁, r₂, ...)corresponds to a single-slot resource, and the higher layer does not provide the number N of consecutive slots for multi-consecutive slots transmission, then the candidate resource set (SA) is determined at a granularity of single-slot resources;
in a case that each value in the set (r₀, r₁, r₂, ...) corresponds to a single-slot resource, and the higher layer provides the number N of consecutive slots for multi-consecutive slots transmission, then the candidate resource set (SA) is determined at a granularity of multi-slot resource;
in a case that each value in the set (r₀, r₁, r₂, ...) corresponds to a consecutive multi-slot resource, and the higher layer provides the number N of consecutive slots for multi-consecutive slots transmission, then the candidate resource set (SA) is determined at a granularity of multi-slot resource.

Step 3: the physical layer determines whether any resource in the set (r₀, r₁, r₂, ...) or any consecutive multi-slot resource rᵢ, or any plurality of consecutive resources (rᵢ, ..., r_{i+N-1}) are still contained in the SA; in a case that it is not included in the SA, the physical layer reports the re-evaluation condition to the higher layer.

In this step, rᵢ or(*rᵢ*, ... , *r*_{*i*+*N*-1}) which is not included in the SA is the first target resource.

Step 4: the higher layer removes rᵢ or (*rᵢ*, ... , *r*_{*i*+*N*-1}) from the selected sidelink grant associated with the sidelink process, randomly reselects for the removed resource a resource from the SA, and replaces the removed resource with the reselected resource for the selected sidelink grant.

In a case that rᵢ is a single-slot resource and is included in the initially selected consecutive multi-slot resource, or rᵢ is a consecutive multi-slot resource and has a length less than that of the initially selected consecutive multi-slot resource, the terminal may select to reselect a resource only for rᵢ or reselect a resource for a consecutive multi-slot resource including rᵢ.

Alternatively, for multi-consecutive slots transmission, the resources to be re-evaluated determined by the higher layer include:
a first resource of the consecutive multi-slot resources; or,
an entire set of resources of the consecutive multi-slot resources; or,
first M resources of the consecutive multi-slot resources, M being the maximum number of resources indicated by sidelink control information (SCI), or M being a positive integer determined by the higher layer.

That is, for the subsequent resources of the indicated multi-consecutive slots transmission, considering that consecutive transmission may be performed after the transmission on the first resource is completed, the resource re-evaluation may not be performed on the subsequent resources of the indicated multi-consecutive slots transmission.

In the foregoing embodiment, there is usually an interval between the time when the terminal completes resource selection and the time when the reserved resource is located. Resource re-evaluation enables the terminal to continue channel monitoring after completing resource selection and to re-evaluate the availability of the reserved resources before transmission, thereby better avoiding resource collisions and improving the reliability of service transmission.

In some embodiments, performing resource pre-emption check includes:
acquiring a resource set which is provided by a higher layer and on which resource pre-emption check is to be performed, wherein each value in the resource set corresponds to a single-slot resource or a consecutive multi-slot resource;
according to a candidate resource set and a transmission priority, performing pre-emption checking on resources in the resource set, and determining a second target resource to be pre-empted;
performing resource re-selection for the second target resource,
wherein in cases where the second target resource is a single-slot resource and is included in the initially selected continuous multi-time slot resource, or, in cases where the second target resource is a consecutive multi-slot resource and has a length smaller than that of the initially selected consecutive multi-slot resource, performing resource re-selection for the second target resource includes:
   performing resource re-selection only for the second target resource, or,
   performing resource re-selection for the consecutive multi-slot resource including the second target resource; or,
   when all consecutive multi-slot resources including the second target resource are pre-empted, performing resource re-selection on the consecutive multi-slot resources.

It should be noted that, the triggering conditions for performing resource pre-emption check are not limited to the case where a consistent LBT failure is triggered. For example, the execution of resource pre-emption check may not limit a trigger condition, and may also be applied to another trigger condition. For example, it is triggered at moment T3 before a first resource in a resource set on which resource pre-emption check is to be performed, wherein T3 is a processing time related to a subcarrier interval.

Exemplarily, for sidelink terminals working on an unlicensed band, the steps of performing pre-emption check include:
step 1: the higher layer provides a resource set (r₀, r₁, r₂, ...) on which resource pre-emption check is to be performed;
wherein the resource set on which resource pre-emption check is to be performed may also be referred to as "a resource set that may be pre-empted" or "a resource set that may be affected by pre-emption", and specifically includes resources that have been selected by the terminal and has been indicated by previous SCI.

In a case that the UE selects single-slot resources during initial resource selection, when performing resource pre-emption check, each value in the set indicated by the higher layer corresponds to a single-slot resource; and
in a case that the UE selects consecutive multi-slot resources during initial resource selection, when performing pre-emption check, the higher layer may indicate that each value in the set corresponds to a single-slot resource or a consecutive multi-slot resource.

In a case that the number of consecutive slots for multi-consecutive slots transmission, provided by the higher layer, is N, and N is an integer greater than 1, then each value in the resource set on which resource pre-emption check is to be performed corresponds to a consecutive multi-slot resource having a length of N.

It should be noted that, when the number of consecutive slots for multi-consecutive slots transmission, provided by the higher layer, is N and N is an integer greater than 1, then it is only an optional implementation that each value in the resource set on which resource pre-emption check is to be performed corresponds to a consecutive multi-slot resource having a length of N. In practical applications, when the number of consecutive slots for multi-consecutive slots transmission, provided by the higher layer, is N and N is an integer greater than 1, it may also be used for determining the candidate resource set at a granularity of multi-slots having a length of N, but not for determining the granularity of the resources represented by each value in the resource set on which resource pre-emption check is to be performed.

Alternatively, the number N of consecutive slots for multi-consecutive slots transmission, provided by the higher layer, is equal to the number of multi-consecutive slots transmission slots selected when the terminal performs initial resource selection.

Alternatively, for multi-consecutive slots transmission, resources on which pre-emption check is to be performed, determined by the higher layer, include:
a first resource of the consecutive multi-slot resources; or,
an entire set of resources of the consecutive multi-slot resources; or,
first M resources of the consecutive multi-slot resources, M being the maximum number of resources indicated by sidelink control information (SCI), or M being a positive integer determined by the higher layer.

That is, for the subsequent resources of the indicated multi-consecutive slots transmission, considering that consecutive transmission may be performed after the transmission on the first resource is completed, even in a case that pre-empted, no avoidance is required, and therefore pre-emption check may not be performed on the subsequent resources of the indicated multi-consecutive slots transmission.

It should be noted that resources that may be indicated by the SCI are limited by the parameter sl-MaxNumPerReserve, wherein the parameter sl-MaxNumPerReserve defines the maximum number of resources indicated by the SCI. Considering that the pre-emption check may only be performed on the resources indicated by the SCI, when performing pre-emption check, resources on which pre-emption check is to be performed, which are determined by the higher layer, may include first M resources of consecutive multi-slot resources; wherein M is the maximum number of resources indicated by the SCI, that is, sl-MaxNumPerReserve; or M may also be any positive integer determined by the higher layer; or M may also be a positive integer determined by the higher layer and less than sl-MaxNumPerReserve.

Exemplarily, referring to Fig. 9, when initially selecting resources, the terminal selects a group of consecutive multi-slot resources having a length of 6. For the initially selected 6 resources, even in a case that they satisfy the condition of being indicated by previous SCI, preemption check is still no longer performed due to completion of the first transmission. Regarding the transmission resources for the next period, since they also meet the condition of being indicated by SCI, at the moment n', the higher layer triggers the physical layer to perform preemption check for this group of multi-consecutive slots transmissions, or for the first transmission of this group of multi-consecutive slots transmissions, or for the first M transmissions of this group of multi-consecutive slots transmissions, and provides the resources that may be pre-empted. In this case, the higher layer may instruct the physical layer to perform single-slot pre-emption check on (1', 2', 3', 4', 5', 6') (i.e., in a resource set on which resource pre-emption check is to be performed, r₀' corresponds to 1', r₁' corresponds to 2', r₂' corresponds to 3', and so on; the physical layer determines the candidate resource set at a granularity of single slots); or, the higher layer may instruct the physical layer to perform multi-slot pre-emption check on (1', 2', 3', 4', 5', 6') (i.e. in a resource set to be re-evaluated, r₀' corresponds to 1', r₁' corresponds to 2', r₂' corresponds to 3', and so on; the physical layer determines a candidate resource set at a granularity of multi-slot (i.e. 6 slots)); or the higher layer instructs the physical layer to perform multi-slot pre-emption check on (1'), wherein (1') corresponds to a consecutive multi-slot resource of which the starting resource is 1' and the length is N (i.e. in the resource set to be re-evaluated, r₀' corresponds to 1, and the physical layer determines the candidate resource set at a granularity of multi-slot (i.e. 6 slots)); or, assuming that the maximum number (i.e., sl-MaxNumPerReserve) of resources indicated by SCI is 3, and M=3, the higher layer may also instruct the physical layer to perform single-slot pre-emption check on the first 3 resources (1', 2', 3') of the multi-consecutive slots transmission; or the higher layer instructs the physical layer to perform multi-slot pre-emption check on (1'), wherein (1') corresponds to a consecutive multi-slot resource of which the starting resource is 1' and the length is N (i.e. in the resource set to be re-evaluated, r₀' corresponds to 1, and the physical layer determines the candidate resource set at a granularity of multi-slot (i.e. 3 slots, in this case, M=N)).

Step 2: the physical layer re-determines a candidate resource set (SA) according to the moment n' when the higher layer triggers pre-emption check, and/or the number N of consecutive slots for multi-consecutive slots transmission (the determination method is similar to re-evaluation), and reports the SA to the higher layer.

Step 3: the physical layer determines whether any resource in the set (r₀', r₁', r₂', ...) or any consecutive multi-slot resource r'ᵢ, or any plurality of consecutive resources (rᵢ', ..., r'_{i+N-1}) satisfies the following conditions, and in a case that so, the physical layer reports the pre-emption condition of r'ᵢ or (rᵢ', ..., r'_{i+N-1}) to the higher layer:
condition 1: r'ᵢ or (rᵢ', ..., r'_{i+N-1}) is not included in SA;
condition 2: r'ᵢ or (rᵢ', ..., r'_{i+N-1}) is excluded during resource exclusion due to detection of a higher-priority transmission, wherein the higher-priority transmission satisfies one of:
   the priority is higher than the priority of the UE's own transmission; and
   the priority is higher than the priority of the UE's own transmission, and higher than a pre-configured priority (the priority value is lower than a pre-configured threshold).

Step 4: the higher layer removes r'ᵢ or (rᵢ', ..., r'_{i+N-1}) from the selected sidelink grant associated with the sidelink process, randomly reselects for the removed resource a resource from the SA, and replaces the removed resource with the reselected resource for the selected sidelink grant,
wherein in a case that r'ᵢ is a single-slot resource and is included in the initially selected consecutive multi-slot resource, or r'ᵢ is a consecutive multi-slot resource and has a length less than that of the initially selected consecutive multi-slot resource, the terminal may select to reselect a resource only for r'ᵢ or perform reselection for consecutive multi-slot resources including r'ᵢ, or the terminal performs reselection for the consecutive multi-slot resource only when all the consecutive multi-slot resources including r'ᵢ are pre-empted.

In the above embodiments, since the principle of sidelink transmission is to prioritize the transmission of high-priority services, pre-emption check allows the terminal to check the transmission statuses of different services on the channel before transmission, and in a case that the reserved resources of a high-priority service overlap with the resources of the terminal, the terminal will perform resource avoidance and resource re-selection to ensure that the high-priority service may complete transmission.

### Second embodiment

As shown in Fig. 10, some embodiments of the present disclosure provide a resource selection device 1000 for an unlicensed band, which is applied to a terminal, and includes:
a processing module 1001, configured to execute a target operation in a case that a sidelink consistent listen-before-talk (LBT) failure is triggered, the target operation including at least one of the following:
resource re-selection;
candidate resource set determination;
resource re-evaluation; and
resource pre-emption check.

Alternatively, the processing module 1001 includes:
a first processing submodule, configured to execute the target operation in a case that the sidelink consistent LBT failure is triggered on a first resource block (RB) set, wherein the first RB set is a resource block set occupied by a selected resource of the terminal; and the selected resource of the terminal includes at least one single-slot resource or at least one consecutive multi-slot resource.

Alternatively, the processing module 1001 includes:
a first resource re-selection submodule, configured to clear a selected sidelink grant associated with a sidelink process, and trigger resource re-selection;

Alternatively, the processing module 1001 includes at least one of the following:
a second resource re-selection submodule, configured to clear the selected sidelink grant associated with a sidelink process, and trigger resource re-selection;
a third resource re-selection submodule, configured to perform resource re-selection on resources overlapping with the first RB set, and update the sidelink grant; and
a fourth resource re-selection submodule, configured to perform resource re-selection on resources overlapping with the first RB set, and updating the sidelink grant.

Alternatively, the fourth resource re-selection submodule includes:
a first unit, configured to, in cases where an LBT recovery duration is less than a service transmission period, perform resource selection for resources overlapping with the first RB set, and not update the sidelink grant.

Alternatively, the processing module 1001 includes at least one of the following:
a first candidate resource determination submodule, configured to, in a case that a candidate resource set obtained by excluding resources does not include candidate single-slot resources within an active time of a sidelink discontinuous reception (SL DRX) of a receiving terminal, additionally select, for the candidate resource set, at least one candidate single-slot resource within the active time;
a second candidate resource determination submodule, configured to, in a case that the candidate resource set obtained by excluding resources does not include candidate multi-slot resources within the active time of the SL DRX of the receiving terminal, additionally select, for the candidate resource set, at least one candidate multi-slot resource within the active time; and
a third candidate resource determination submodule, configured to, in a case that the candidate resource set obtained by excluding resources does not include at least partially overlapping candidate multi-slot resources within the active time of the SL DRX of the receiving terminal, additionally select, for the candidate resource set, at least one at least partially overlapping candidate multi-slot resource within the active time.

Alternatively, the processing module 1001 includes:
a first re-evaluation submodule, configured to acquire a resource set to be re-evaluated provided by a higher layer, wherein each value in the resource set corresponds to a single-slot resource or a consecutive multi-slot resource;
a second re-evaluation submodule, configured to perform re-evaluation on resources in the resource set, and determining a first target resource not included in a candidate resource set;
a third re-evaluating submodule, configured to perform resource re-selection for the first target resource,
wherein in cases where the first target resource is a single-slot resource and is included in the initially selected continuous multi-time slot resource, or, in cases where the first target resource is a consecutive multi-slot resource and has a length smaller than that of the initially selected consecutive multi-slot resource, performing resource re-selection for the first target resource includes: performing resource re-selection only for the first target resource, or performing resource re-selection for the consecutive multi-slot resource including the first target resource.

Alternatively, the processing module 1001 includes:
a first pre-emption check submodule, configured to acquire a resource set which is provided by a higher layer and on which resource pre-emption check is to be performed, wherein each value in the resource set corresponds to a single-slot resource or a consecutive multi-slot resource;
a second pre-emption checking submodule, configured to, according to a candidate resource set and a transmission priority, execute pre-emption checking on resources in the resource set, and determine a second target resource to be pre-empted;
a third pre-emption checking submodule, configured to perform resource re-selection only for the second target resource,
wherein in cases where the second target resource is a single-slot resource and is included in the initially selected continuous multi-time slot resource, or, in cases where the second target resource is a consecutive multi-slot resource and has a length smaller than that of the initially selected consecutive multi-slot resource, performing resource re-selection for the second target resource includes:
   performing resource re-selection only for the second target resource, or,
   performing resource re-selection for the consecutive multi-slot resource including the second target resource; or,
   when all consecutive multi-slot resources including the second target resource are pre-empted, performing resource re-selection on the consecutive multi-slot resources.

Alternatively, in a case that the number of consecutive slots for multi-consecutive slots transmission, provided by the higher layer, is N and N is an integer greater than 1, each value in the resource set corresponds to a consecutive multi-slot resource having a length of N.

Alternatively, the number N of consecutive slots for multi-consecutive slots transmission, provided by the higher layer, is equal to the number of multi-consecutive slots transmission slots selected when the terminal performs initial resource selection.

Alternatively, for multi-consecutive slots transmission, the resources to be re-evaluated or the resources to be pre-empted and checked, which are determined by the higher layer, include:
a first resource of the consecutive multi-slot resources; or,
an entire set of resources of the consecutive multi-slot resources; or,
first M resources of the consecutive multi-slot resources, M being the maximum number of resources indicated by sidelink control information (SCI), or M being a positive integer determined by the higher layer.

The second embodiment of the present disclosure corresponds to the method of the first embodiment. All implementation means in the first embodiment are applicable to the embodiment of the resource selection device for the unlicensed band, and may also achieve the same technical effect.

### Third embodiment

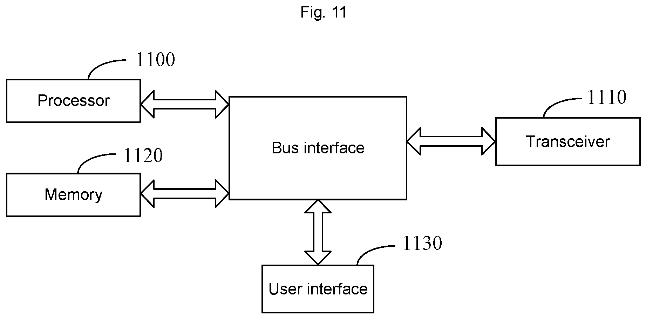

In order to better achieve the described object, as shown in Fig. 11, a third embodiment of the present disclosure further provides a terminal, including:
a processor 1100; and a memory 1120 connected to the processor 1100 by means of a bus interface, wherein the memory 1120 is used for storing a program and data which are used by the processor 1100 when performing an operation, and the processor 1300 calls and executes the program and data stored in the memory 1120.

The transceiver 1110 is connected to a bus interface, and is configured to receive and send data under the control of the processor 1100. The processor 1100 is configured to read a program in the memory 1120 to implement the following steps:
performing a target operation in a case that a sidelink consistent listen-before-talk (LBT) failure is triggered, the target operation including at least one of the following:
resource re-selection;
candidate resource set determination;
resource re-evaluation; and
resource pre-emption check.

In Fig. 11, the bus architecture may include any number of buses and bridges connected to each other, and is specifically linked by various circuits of one or more processors represented by the processor 1100 and a memory represented by the memory 1120. The bus architecture may further link various other circuits such as a peripheral device, a voltage regulator, and a power management circuit together. These are all well-known in the art, and therefore are not further described in the present specification. The bus interface provides an interface. The transceiver 1110 may be a plurality of elements, that is, include a transmitter and a receiver, and provide a unit for communicating with various other apparatuses on a transmission medium. For different terminals, the user interface 1130 may be an interface for externally and internally connecting a required device. The connected device includes, but is not limited to a keypad, a display, a speaker, a microphone, a joystick, or the like. The processor 1100 is responsible for managing the bus architecture and common processing, and the memory 1120 may store data used when the processor 1100 performs an operation.

Alternatively, the processor 1100 is configured to read a program in the memory 1120 to execute the following steps:
performing the target operation in a case that the sidelink consistent LBT failure is triggered on a first resource block (RB) set, wherein the first RB set is a resource block set occupied by a selected resource of the terminal; and the selected resource of the terminal includes at least one single-slot resource or at least one consecutive multi-slot resource.

Alternatively, the processor 1100 is configured to read a program in the memory 1120 to execute the following steps:
clearing a selected sidelink grant associated with a sidelink process, and triggering resource re-selection.

Alternatively, the processor 1100 is further configured to read a program in the memory 1120 to execute at least one of the following steps:
clearing a selected sidelink grant associated with a sidelink process, and triggering resource re-selection;
performing resource re-selection on resources overlapping with the first RB set, and updating the sidelink grant; and
performing resource re-selection on resources overlapping with the first RB set, and not updating the sidelink grant.

Alternatively, the processor 1100 is further configured to read a program in the memory 1120 to execute the following steps:
in cases where an LBT recovery duration is less than a service transmission period, performing resource selection for resources overlapping with the first RB set, and not updating the sidelink grant.

Alternatively, the processor 1100 is further configured to read a program in the memory 1120 to execute at least one of the following steps:
in a case that a candidate resource set obtained by excluding resources does not include candidate single-slot resources within an active time of a discontinuous reception (DRX) of a receiving terminal, additionally selecting, for the candidate resource set, at least one candidate single-slot resource within the active time;
in a case that the candidate resource set obtained by excluding resources does not include candidate multi-slot resources within the active time of the DRX of the receiving terminal, additionally selecting, for the candidate resource set, at least one candidate multi-slot resource within the active time; and
in a case that the candidate resource set obtained by excluding resources does not include at least partially overlapping candidate multi-slot resources within the active time of the DRX of the receiving terminal, additionally selecting, for the candidate resource set, at least one at least partially overlapping candidate multi-slot resource within the active time.

Alternatively, the processor 1100 is further configured to read a program in the memory 1120 to execute the following steps:
acquiring a resource set to be re-evaluated provided by a higher layer, wherein each value in the resource set corresponds to a single-slot resource or a consecutive multi-slot resource;
performing re-evaluation on resources in the resource set, and determining a first target resource not included in a candidate resource set;
removing the first target resource from the selected sidelink grant associated with the sidelink process, and performing resource re-selection;
wherein in cases where the first target resource is a single-slot resource and is included in the initially selected continuous multi-time slot resource, or, in cases where the first target resource is a consecutive multi-slot resource and has a length smaller than that of the initially selected consecutive multi-slot resource, performing resource re-selection includes: performing resource re-selection only for the first target resource, or performing resource re-selection for the consecutive multi-slot resource including the first target resource.

Alternatively, the processor 1100 is further configured to read a program in the memory 1120 to execute the following steps:
acquiring a resource set which is provided by a higher layer and on which resource pre-emption check is to be performed, wherein each value in the resource set corresponds to a single-slot resource or a consecutive multi-slot resource;
according to a candidate resource set and a transmission priority, performing pre-emption checking on resources in the resource set, and determining a second target resource to be pre-empted;
removing the second target resource from the selected sidelink grant associated with the sidelink process, and performing resource re-selection;
wherein in cases where the second target resource is a single-slot resource and is included in the initially selected continuous multi-time slot resource, or, in cases where the second target resource is a consecutive multi-slot resource and has a length smaller than that of the initially selected consecutive multi-slot resource, performing resource re-selection for the second target resource includes:
   performing resource re-selection only for the second target resource, or,
   performing resource re-selection for the consecutive multi-slot resource including the second target resource; or,
   when all consecutive multi-slot resources including the second target resource are pre-empted, performing resource re-selection on the consecutive multi-slot resources.

Alternatively, in a case that the number of consecutive slots for multi-consecutive slots transmission, provided by the higher layer, is N and N is an integer greater than 1, each value in the resource set corresponds to a consecutive multi-slot resource having a length of N.

Alternatively, the number N of consecutive slots for multi-consecutive slots transmission, provided by the higher layer, is equal to the number of multi-consecutive slots transmission slots selected when the terminal performs initial resource selection.

Alternatively, for multi-consecutive slots transmission, the resources to be re-evaluated or the resources to be pre-empted and checked, which are determined by the higher layer, include:
a first resource of the consecutive multi-slot resources; or,
an entire set of resources of the consecutive multi-slot resources; or,
first M resources of the consecutive multi-slot resources, M being the maximum number of resources indicated by sidelink control information (SCI), or M being a positive integer determined by the higher layer.

The terminal provided in the present disclosure executes a target operation in a case that a sidelink consistent listen-before-talk (LBT) failure is triggered, the target operation including at least one of the following: candidate resource set determination; resource re-evaluation; and resource pre-emption check, so as to ensure that the terminal may perform timely and reliable transmission on an unlicensed band.

A person skilled in the art may understand that all or part of the steps of the above embodiments may be completed by hardware, or may be completed by instructing relevant hardware through a computer program, wherein the computer program includes instructions for performing part or all of the steps of the above method. The computer program may be stored in a readable storage medium, and the storage medium may be any form of storage medium.

In addition, the embodiment of the present disclosure further provides a computer-readable storage medium, on which a computer program is stored, and when the program is executed by a processor, the steps of the methods in the first embodiment or the second embodiment are implemented. Furthermore, the same technical effect may be achieved, and in order to avoid repetition, it will not be repeated here.

In addition, it needs to be pointed out that, in the apparatus and method of the present disclosure, obviously, each component or each step may be decomposed and/or recombined. These decomposition and/or recombination should be regarded as equivalent solutions of the present disclosure. In addition, the steps of performing the above series of processing may be performed naturally in chronological order in the order of description, but do not necessarily need to be performed in chronological order, and some steps may be performed in parallel or independently of each other. A person of ordinary skill in the art may understand that all or any steps or components of the methods and apparatuses of the present disclosure may be implemented in hardware, firmware, software, or a combination thereof in any computing device (including processors, storage media, etc.) or network of computing devices, this may be achieved by a person skilled in the art by using their basic programming skills in the case of reading the description of the present disclosure.

Therefore, the object of the present disclosure may also be achieved by running a program or a set of programs on any computing device. The computing device may be a well-known universal device. Therefore, the object of the present disclosure may also be achieved only by providing a program product containing program codes for implementing the method or device. That is to say, such a program product also constitutes the present disclosure, and a storage medium storing such a program product also constitutes the present disclosure. Apparently, the storage medium may be any known storage medium or any storage medium developed in the future. It should also be noted that in the devices and methods of the present disclosure, apparently, each component or each step may be decomposed and/or recombined. These decomposition and/or recombination should be regarded as equivalent solutions of the present disclosure. In addition, the steps of performing the above series of processing may be performed naturally in chronological order in the order of description, but do not necessarily need to be performed in chronological order, and some steps may be performed in parallel or independently of each other.

The contents above are only the preferred embodiments of the present disclosure. It should be pointed out that for a person of ordinary skill in the technical field, several improvements and refinements may be made without departing from the principle of the present disclosure, and these improvements and refinements shall also fall within the protection scope of the present disclosure.

## Claims

1. A resource selection method for an unlicensed band, applied to a terminal, comprising:
performing a target operation in a case that a sidelink consistent listen-before-talk ,LBT, failure is triggered, the target operation comprising at least one of the following:
resource re-selection;
candidate resource set determination;
resource re-evaluation; and
resource pre-emption check.

2. The method as claimed in claim 1, wherein performing the target operation in a case that the sidelink consistent listen-before-talk (LBT) failure is triggered comprises:
performing the target operation in a case that the sidelink consistent LBT failure is triggered on a first resource block ,RB, set, wherein the first RB set is a resource block set occupied by a selected resource of the terminal; and the selected resource of the terminal comprises at least one single-slot resource or at least one consecutive multi-slot resource.

3. The method as claimed in claim 1, wherein performing resource re-selection comprises:
clearing a selected sidelink grant associated with a sidelink process, and triggering resource re-selection.

4. The method as claimed in claim 2, wherein performing resource re-selection comprises at least one of:
clearing a selected sidelink grant associated with a sidelink process, and triggering resource re-selection;
performing resource re-selection on resources overlapping with the first RB set, and updating the sidelink grant; and
performing resource re-selection on resources overlapping with the first RB set, and not updating the sidelink grant.

5. The method as claimed in claim 4, wherein performing resource re-selection on resources overlapping with the first RB set, and not updating the sidelink grant comprise:
in cases where an LBT recovery duration is less than a service transmission period, performing resource selection for resources overlapping with the first RB set, and not updating the sidelink grant.

6. The method as claimed in claim 1, wherein performing candidate resource set determination comprises at least one of the following:
in a case that a candidate resource set obtained by excluding resources does not comprise candidate single-slot resources within an active time of a sidelink discontinuous reception (SL DRX) of a receiving terminal, additionally selecting, for the candidate resource set, at least one candidate single-slot resource within the active time;
in a case that the candidate resource set obtained by excluding resources does not comprise candidate multi-slot resources within the active time of the SL DRX of the receiving terminal, additionally selecting, for the candidate resource set, at least one candidate multi-slot resource within the active time; and
if the candidate resource set obtained by excluding resources does not comprise at least partially overlapping candidate multi-slot resources within the active time of the SL DRX of the receiving terminal, additionally selecting, for the candidate resource set, at least one at least partially overlapping candidate multi-slot resource within the active time.

7. The method as claimed in claim 1, wherein performing resource re-evaluation comprises:
acquiring a resource set to be re-evaluated provided by a higher layer, wherein each value in the resource set corresponds to a single-slot resource or a consecutive multi-slot resource;
performing re-evaluation on resources in the resource set, and determining a first target resource not comprised in a candidate resource set;
performing resource re-selection for the first target resource,
wherein in cases where the first target resource is a single-slot resource and is comprised in the initially selected continuous multi-time slot resource, or, in cases where the first target resource is a consecutive multi-slot resource and has a length smaller than that of the initially selected consecutive multi-slot resource, performing resource re-selection for the first target resource comprises: performing resource re-selection only for the first target resource, or performing resource re-selection for the consecutive multi-slot resource comprising the first target resource.

8. The method as claimed in claim 1, wherein performing resource pre-emption check comprises:
acquiring a resource set which is provided by a higher layer and on which resource pre-emption check is to be performed, wherein each value in the resource set corresponds to a single-slot resource or a consecutive multi-slot resource;
according to a candidate resource set and a transmission priority, performing pre-emption checking on resources in the resource set, and determining a second target resource to be pre-empted;
performing resource re-selection for the second target resource,
wherein in cases where the second target resource is a single-slot resource and is comprised in the initially selected continuous multi-time slot resource, or, in cases where the second target resource is a consecutive multi-slot resource and has a length smaller than that of the initially selected consecutive multi-slot resource, performing resource re-selection for the second target resource comprises:
performing resource re-selection only for the second target resource, or,
performing resource re-selection for the consecutive multi-slot resource comprising the second target resource; or,
when all consecutive multi-slot resources comprising the second target resource are pre-empted, performing resource re-selection on the consecutive multi-slot resources.

9. The method as claimed in claim 7 or 8, further comprising:
in a case that number of consecutive slots for multi-consecutive slots transmission, provided by the higher layer, is N, and N is an integer greater than 1, then each value in the resource set corresponds to a consecutive multi-slot resource having a length of N.

10. The method as claimed in claim 9, wherein the number N of consecutive slots for multi-consecutive slots transmission, provided by the higher layer, is equal to the number of multi-consecutive slots transmission slots selected when the terminal performs initial resource selection.

11. The method as claimed in claim 7 or 8, wherein for multi-consecutive slots transmission, the resources to be re-evaluated or the resources to be pre-empted and checked, which are determined by the higher layer, comprise:
a first resource of the consecutive multi-slot resources; or,
an entire set of resources of the consecutive multi-slot resources; or,
first M resources of the consecutive multi-slot resources, M being the maximum number of resources indicated by sidelink control information (SCI), or M being a positive integer determined by the higher layer.

12. A terminal, comprising: a transceiver, a memory, a processor and a computer program stored in the memory and capable of running on the processor, wherein the processor executes the computer program to implement the steps of the resource selection method for the unlicensed band according to any one of claims 1 to 11 .

13. A resource selection device for an unlicensed band, comprising:
a processing module, configured to execute a target operation if a sidelink consistent listen-before-talk (LBT) failure is triggered, the target operation comprising at least one of the following:
resource re-selection;
candidate resource set determination;
resource re-evaluation; and
resource pre-emption check.

14. A non-transitory computer readable storage medium, on which a computer program is stored, wherein the computer program, when executed by a processor, implements the steps of the resource selection method for the unlicensed band as claimed in any one of claims 1 to 11.
